## Europäisches Patentamt
## European Patent Office
## Office européen des brevets

(19)

(11) Numéro de publication: **0 022 723**
**B1**

(12) **FASCICULE DE BREVET EUROPEEN**

(45) Date de publication du fascicule du brevet:
**30.05.84**

(21) Numéro de dépôt: **80401049.4**

(22) Date de dépôt: **11.07.80**

(51) Int. Cl.³: **H 04 N 7/04**

(54) **Procédé et dispositif pour l'extraction de données numériques en présence de bruit et de distorsions.**

(30) Priorité: **17.07.79 FR 7918468**

(43) Date de publication de la demande:
**21.01.81 Bulletin 81/3**

(45) Mention de la délivrance du brevet:
**30.05.84 Bulletin 84/22**

(84) Etats contractants désignés:
**DE FR GB IT NL**

(56) Documents cités:
**GB - A - 1 523 307**
**US - A - 4 145 743**

(73) Titulaire: **THOMSON-CSF, 173, Boulevard Haussmann, F-75379 Paris Cedex 08 (FR)**

(72) Inventeur: **Sauvanet, Maurice, "THOMSON-CSF" SCPI 173, Bld Haussmann, F-75360 Paris Cedex 08 (FR)**

(74) Mandataire: **Eisenbeth, Jacques Pierre et al, THOMSON-CSF SCPI 173, Bld Haussmann, F-75379 Paris Cedex 08 (FR)**

## Description

La présente invention concerne un procédé pour l'extraction de données numériques en présence de bruit et de distorsions, ainsi qu'un dispositif destiné à la mise en œuvre de ce procédé, l'invention se rapportant plus particulièrement à la réception, dans des conditions perturbées, de données transmises sous forme numérique dans des systèmes utilisant comme support un signal vidéo de télévision, ces systèmes étant connus sous l'appellation «vidéotexte».

Il est rappelé que, dans ce genre de systèmes, des messages sont transmis sous forme numérique en utilisant un code binaire sans retour à zéro, par paquets de données pouvant provenir d'une ou de plusieurs sources, chaque paquet de données étant précédé d'une salve d'impulsions d'identification et de synchronisation, constituée par une succession de 1 et de 0 alternés. Cette salve fait partie, pour le paquet de données qui suit, d'un «en-tête» destiné entre autres à l'identification de la source d'information correspondante; son rôle est de fournir un signal de référence, à fréquence et phase déterminées, sur lequel doit être accordée une horloge locale du récepteur à partir de laquelle est effectué le décodage du message contenu dans le paquet de données. Plus particulièrement, dans le système de «vidéotexte» ici considéré, les paquets de données sont insérés sur des lignes de télévision, chaque paquet étant ainsi placé entre deux signaux de «synchronisation ligne» habituels en télévision, la technique utilisée étant celle du multiplexage temporel des signaux numériques avec un signal d'image analogique, ce qui permet d'utiliser les bandes existantes de fréquence allouées à la diffusion des programmes de télévision. Les paquets de données sont ainsi transmis sur plusieurs lignes successives ou éventuellement sur une ligne isolée parmi d'autres contenant simplement l'information d'image de télévision. Pour un paquet de données correspondant à une ligne de télévison, on insère, après le signal de «synchronisation ligne» habituel, la salve de synchronisation puis le paquet de données, la durée de ladite salve étant petite devant celle du paquet de données. La technique de transmission choisie exige un ensemble de démodulation se composant d'un récepteur de télévision associé à un système d'interface, apte à être connecté à un terminal sur lequel est reconstitué le message transmis. L'interface se compose d'une partie logique capable de sélectionner la source désirée, et d'une partie de démultiplexage qui extrait du signal vidéo les informations numériques et les remet en forme.

Il convient ici de reconstituer les données numériques avec une amplitude constante et un espacement fidèle des 1 et des 0, lorsque la réception des signaux est perturbée. Dans ce but, on découpe dans le signal vidéo reçu et «tranche» située à un niveau m tel qu'après découpage, un 1 et un 0 successifs soient de même largeur. Pour définir le niveau de découpage optimal m, un procédé consiste à prendre la valeur de tension moyenne du signal reçu pendant la durée de la salve de synchronisation, puis à conserver en mémoire cette valeur moyenne, pendant toute la durée restante du paquet d'informations numérique, c'est-à-dire dans l'application ici plus particulièrement considérée, jusqu'à la fin de la ligne de télévision. La présente invention s'intéresse à l'établissement de cette valeur de tension moyenne m et, plus précisément, à la définition des instants entre lesquels on mesure la valeur moyenne de la salve de synchronisation (ou mieux: la valeur qui tend vers un découpage donnat une égalité des largeuers des 1 et des 0).

Un document typique de l'état de la technique est constitué par le brevet britannique 1 523 507 relatif au décodage de données dans des systèmes de télétexte. Selon ce document, pour décoder les données, on élabore lors de chauqe salve un signal de valeur moyenne. Toutefois, on n'enseigne pas comment déterminer les instants de prise de valeur moyenne, c'est-à-dire comment identifier le début et la fin de la salve.

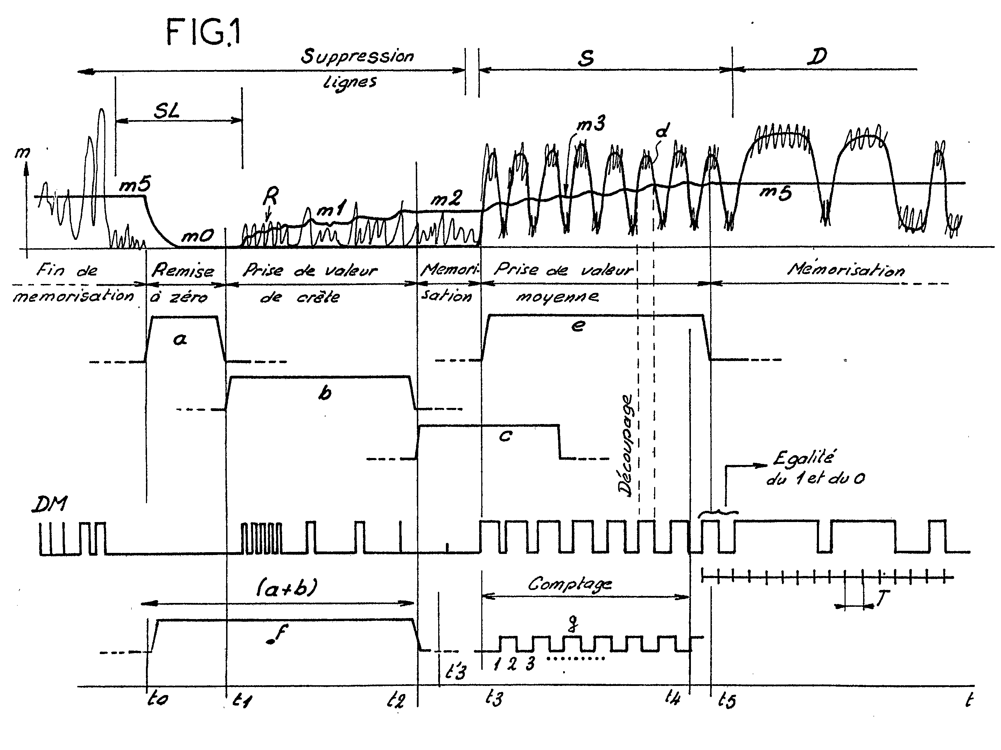

Si l'on se réfère à la fig. 1 du dessin annexé, le problème posé est de définir avec précision les instants notés t3 et t5 entre lesquels est déterminée la valeur moyenne de la salve de synchronisation S. t3 est l'instant où l'on commence la mesure, cet instant coïncidant de préférence avec le début du premier 1 de la salve S. t5 est l'instant où se termine la mesure et où la valeur de tension moyenne m5 obtenue est mémorisée. L'instant choisi comme origine, noté t0, est celui où cette mémorisation est interrompue, la tension étant ramenée alors à une valeur «zéro» de référence m0, par exemple le niveau du noir du signal de télévision.

Suivant un procédé déjà utilisé, la remise à zéro est effectuée par un signal f, présent entre les instants t0 et t2. Le début de ce signal, c'est-à-dire l'instant t0, correspond au début du signal SL de «synchronisation ligne» de télévision. La fin du signal f considéré, c'est-à-dire l'instant t2, intervient au voisinage de l'instant t3 où devra arriver le premier front montant de la salve de synchronisation S, et de préférence un peu avant.

Un autre signal e, commençant après l'instant t2 et finissant en un instant t4, peu avant la fin de la salve et le début des données D, habilite le système de mesure de la valeur moyenne m.

Malheureusement il est très difficile de définir avec assez de précision la durée et la position des signaux f et e précédemment évoqués, pour les amener en coïncidence avec le début et la fin de la salve S émise, ceci surtout en cas de réception perturbée. Or il est important que la mémorisation de la valeur moyenne m intervienne en tout cas avant la fin de la salve, et que la durée de mesure de cette valeur moyenne, soit la durée du signal e, représente une fraction suffisamment importante de la durée totale de la salve.

La seule durée du signal e peut être définie avec assez de précision, par exemple au moyen d'un monostable très stable et précis, ou mieux, par comptage des périodes de l'horloge locale utilisée pour la lecture des données D. Cependant la définition précise de la position du signal e suppose la connaissance très exacte de l'instant t3 où commence la salve S.

Le début du signal e pourrait être conditionné par l'instant t2 de la fin du signal f, lui-même en relation avec la position du signal de «synchronisation ligne» SL, mais l'instant t2 est défini ainsi avec une très mauvaise précision par rapport à l'instant réel t3 d'apparition de la salve S.

Une idée de solution à ce problème serait de faire commencer le signal e en relation avec la détection d'apparition du premier front montant de la salve de synchronisation S, en effectuant cette détection sur le signal découpé (au sens qui a été défini plus haut) pour s'affranchir le plus possible du bruit. Toutefois, comme la valeur moyenne a été ramenée à un niveau nul mO avant l'instant t3, le signal découpé DM contiendrait tout le bruit, et il serait impossible d'en extraire le premier front de la salve.

Si l'amplitude du signal constituant la salve est peu variable, on peut résoudre simplement ce problème, en imposant à la valeur m, après la prise de valeur moyenne, une valeur de seuil fixe non nulle, correspondant à peu près à la moitié de l'amplitude prévue pour les 1 de la salve. Malheureusement, en régime de réception perturbée, l'amplitude de la salve est très variable et ne peut être connue qu'après son apparition ce qui rend difficile la fixation d'une telle valeur de seuil.

La présente invention vise à écarter cette difficulté.

A cet effet, elle a essentiellement pour objet un procédé pour l'extraction de données numériques en présence de bruit et de distorsions, plus particulièrement un procédé dans lequel on établit la valeur moyenne d'une tension pendant la présence d'un signal dit salve constitué par une succession de 1 et de 0 alternés, de telle sorte qu'après découpage à un niveau correspondant à ladite valeur moyenne, un 1 et un 0 successifs soient de même largeur, la prise de valeur moyenne s'effectuant sensiblement entre le début et la fin de la salve, et cette valeur moyenne étant mémorisée à la fin de la salve puis ramenée à une valeur de référence avant l'apparition de la salve suivante, ce procédé consistant, selon l'invention, à faire évoluer la valeur considérée conformément aux phases de la revendication 1.

Suivant un mode de mise en œuvre préféré de ce procédé, la valeur de seuil précitée, proportionnée au niveau de bruit, est obtenue en détectant la valeur de crête du signal reçu pendant l'intervalle de temps précédant l'instant le plus tôt possible d'apparition de la salve, et en mémorisant la valeur obtenue par cette détection de crête, jusqu'à l'apparition effective du premier 1 de la salve.

Grâce à ce procédé, qui permet de fixer à un niveau convenable une valeur de seuil ensuite utilisée pour la prise de valeur moyenne de la salve, cette valeur de seuil tenant compte du bruit et des perturbations qui précèdent juste l'apparition de la salve, il devient possible de définir avec précision l'instant t3 du début du signal e, déjà précédemment considéré, qui habilite la mesure de la valeur moyenne de la salve.

Suivant une caractéristique intéressante de l'invention, la détection de crête définissant la valeur de seuil, d'une part, et la prise de valeur moyenne, d'autre part, sont effectuées par les mêmes moyens, plus particulièrement le même circuit incluant une capacité. On est ainsi assuré que la valeur de seuil résultant de la détection de crête est convenablement proportionnée à la valeur de seuil résultant de la détection de crête est convenablement proportionnée à la valeur moyenne finale souhaitée, et convenablement située par rapport au niveau du noir du signal de télévision.

Après la détection du premier 1 de la salve, on peut définir la durée de prise de valeur moyenne par comptage d'un nombre entier prédéterminé de périodes d'une horloge locale, ce qui permet de définir avec précision un instant situé vers la fin de la salve. Suivant deux caractéristiques complémentaires du procédé selon l'invention:

- le début du comptage précité est autorisé par un signal de porte, commençant à l'instant où la valeur de seuil, obtenue par écrêtage, est mémorisée, et finissant après l'instant le plus tardif probable d'apparition de la salve;

- l'instant de fin de la prise de valeur moyenne, et de mémorisation de cette valeur, est retardé, à partir de la fin du comptage, jusqu'à une transition déterminée de la salve, correspondant à une position bien déterminée de l'ondulation résiduelle de la tension vers la fin de la prise de valeur moyenne.

L'invention a également pour objet un dispositif électronique spécialement destiné à la mise en œuvre du procédé défini ci-dessus, et destiné à un système de «vidéotexte».

Ce dispositif comprend essentiellement: une capacité associée à des sources de courant; un comparateur découpeur dont une entrée est reliée à une borne de ladite capacité, et dont l'autre entrée reçoit le signal vidéo à analyser; des moyens de commutation aptes à décharger la capacité pendant le signal de remise à zéro; d'autres moyens de commutation aptes à charger de façon intermittente la capacité, pendant un signal présent à l'intérieur de l'intervalle de «suppression lignes», par les crêtes du signal reçu; et encore d'autres moyens de commutation aptes à charger et décharger alternativement la capacité, sous la même intensité, en fonction du niveau du signal reçu, pendant la salve de synchronisation, pour la prise de valeur moyenne; la capacité servant à la mémorisation de la valeur de seuil et de la valeur moyenne précédemment établies, lorsqu'aucune des sources de courant n'est mise en service par lesdits moyens de commutation.

Suivant une forme de réalisation possible, la capacité est associée à deux générateurs de courant, le premier délivrant une intensité $+2i$ et le second une intensité $-i$, les moyens de commutation étant tels que les deux générateurs sont mis en service simultanément durant la présence des signaux de remise à zéro et de commande de prise de valeur moyenne, et tels que seul le générateur délivrant l'intensité +2i est mis en service durant la présence du signal de commande de prise de valeur de crête.

De préférence, le dispositif comprend encore, à la sortie du comparateur découpeur, un compteur relié à l'horloge locale de lecture des données et associé, d'une part, à une bascule, telle que du type «R–S», pour l'autorisation de fonctionnement du compteur par le signal de porte précité et pour sa remise à zéro, d'autre part, à une bascule, telle que du type «D», dont l'entrée «données» reçoit le signal de sortie du compteur et dont l'entrée «échantillonnage» reçoit le signal découpé. Cette dernière bascule fournit le signal qui se termine lors d'une transition déterminée de la salve, après la fin du comptage, et qui définit la durée de la prise de valeur moyenne.

De toute façon, l'invention sera mieux comprise à l'aide de la description qui suit, en référence au dessin schématique annexé représentant, à titre d'exemple non limitatif, un mode de réalisation de ce dispositif pour l'extraction de données numériques en présence de bruit et de distorsions, et illustrant le procédé mis en œuvre par ce dispositif:

– Fig. 1, déjà mentionnée plus haut, est un diagramme représentant, en fonction du temps t, les différents signaux et les phases successives intervenant dans le procédé selon l'invention;

– Fig. 2 est un schéma de principe du dispositif;

– Fig. 3 représente un exemple de réalisation pratique d'une partie du circuit selon le principe de la fig. 2.

A la partie supérieure du diagramme de la fig. 1 est représenté, en fonction du temps t, le signal d reçu dans le système de «vidéotexte» considéré et comprenant la salve de synchronisation S suivie du paquet de données D, la salve S apparaissant après le signal de «synchronisation ligne» de télévision SL, et aussi après un certain intervalle de temps durant lequel l'image télévisée est supprimée (intervalle désigné par «suppression lignes»). La tension m, dont la valeur moyenne est déterminée durant la présence de la salve S, est représentée en superposition avec le signal vidéo reçu d, de manière à mettre en évidence le découpage donnant le signal noté DM, représenté sur une des lignes inférieures du diagramme.

La valeur moyenne m5, mémorisée lors de la ligne de télévision précédente, est ramenée à un niveau initial m0, entre les instants t0 et t1, par un signal de remise à zéro a qui est présent, de préférence, pendant le signal de «synchronisation ligne» SL. Puis, toujours à l'intérieur de l'intervalle de «suppression lignes», on effectue une prise de valeur de crête (ou de quasi-crête) du signal reçu, entre les instants t1 et t2, c'est-à-dire pendant la présence d'un signal b apparaissant à la fin du signal a. L'instant t2 précède l'instant le plus tôt possible t'3 d'apparition de la salve S dont l'instant d'apparition effectif est désigné par t3.

Au cours de la phase de prise de valeur de crête, entre les instants t1 et t2, la valeur m est augmentée à partir du niveau initial m0 jusqu'à une valeur de seuil m2, proportionnellement au niveau du bruit et des autres perturbations éventuelles du signal reçu, telles que le résidu de salve couleur R. A l'instant t2, la valeur de seuil m2 obtenue par la détection de crête est mémorisée.

On notera que la durée totale des signaux successifs a et b correspond à la durée du signal appelé f, déjà considéré dans l'introduction, mais avec une marge de sécurité t3–t2. Ce signal f constitue un signal d'interdiction du comptage intervenant pour la prise de valeur moyenne.

A l'instant t2, où cessent les signaux b et f, apparaît au contraire un signal de porte noté c qui autorise le début du comptage des périodes T de l'horloge locale de lecture des données D; la durée du signal c est telle qu'il finisse après l'instant le plus tardif probable d'apparition de la salve S. Le comptage commence effectivement lors du premier front montant de la salve S, autrement dit à l'apparition du premier 1 de cette salve. Ce comptage est effectué sur un nombre entier prédéterminé de périodes T de l'horloge locale, jusqu'à un instant t4.

Dès que le premier front montant de la salve est détecté, soit à l'instant t3, un autre signal e est formé, ce signal subsistant jusqu'à un instant t5 postérieur à l'instant t4 de fin du comptage. L'instant t5 est défini comme étant celui d'une première transition déterminée, telle que par exemple le premier front montant, apparaissant après l'instant t4, du signal découpé DM.

La prise de valeur moyenne est opérée durant tout l'intervalle de temps t3–t5, correspondant au signal e. Au cours de cet intervalle, la valeur m3 s'établit progressivement à un niveau pour lequel on tend vers une égalité (de largeur) des 1 et des 0 du signal découpé DM.

A l'instant t5, où s'achève la prise de valeur moyenne, la valeur obtenue m5 est mémorisée, et utilisée pour la lecture du paquet de données D inséré sur la ligne de télévision en cours de transmission.

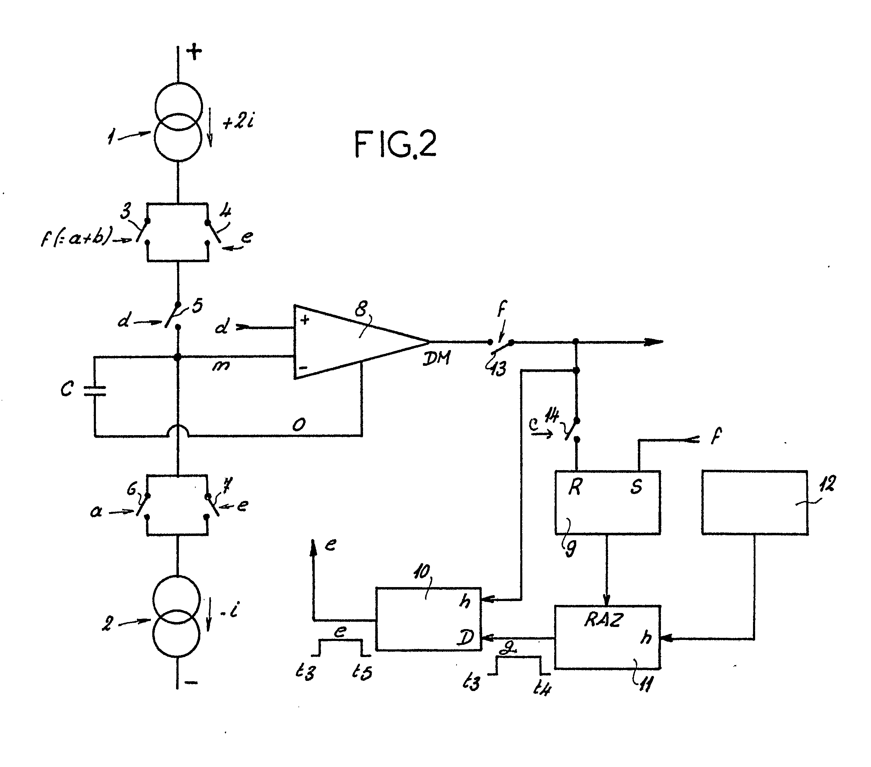

La fig. 2 représente, sous la forme d'un schéma de principe, un mode de réalisation possible d'un circuit capable de mettre en œuvre le procédé indiqué ci-dessus, en traitant les divers signaux intervenant dans ce procédé.

Ce circuit est conçu de manière à obtenir successivement, aux bornes d'une capacité C unique, les différentes valeurs fixes m0, m2 et m5 de la tension m. A cet effet, une même borne de la capacité C est reliée, d'une part, à un premier générateur de courant constant 1 délivrant une intensité +2i, d'autre part, à un second générateur de courant contant 2 délivrant une intensité –i, les signes «plus» et «moins» du courant correspondant respectivement à une charge et à une décharge de la capacité.

Entre le générateur 1 et la capacité C sont intercalés des composants logiques réalisant l'équivalent de deux contacts montés en parallèle, l'un 3 se fermant pendant le signal f (égal à la «somme» des signaux a et b), l'autre 4 se fermant pendant le signal e, et d'un contact supplémentaire 5 commuté par le signal d. Entre le génératuer 2 et la capacité C sont intercalés des composants logiques réalisant l'équivalent de deux autres contacts montés en parallèle, l'un 6 se fermant durant le signal a, l'autre 7 se fermant durant le signal e.

La borne de la capacité C reliée aux deux générateurs de courant 1 et 2 fournit la tension m et est reliée à l'une des entrées d'un comparateur découpeur 8, tandis que l'autre borne de la capacité est à une tension de référence «zéro», aussi amenée à ce comparateur. L'autre entrée du comparateur 8 reçoit le signal à analyser d. La sortie du comparateur 8, délivrant le signal découpé DM, est dirigée d'une part vers les circuits, non représentés, d'exploitation de ce signal, et d'autre part, vers un circuit logique comprenant une bascule 9 de type «R–S», une bascule 10 de type «D», et un compteur 11 relié à l'horloge locale 12 de lecture des données, avec les branchements suivants:
– la sortie du comparateur 8 est reliée à l'entrée «R» de la bascule 9 et à l'entrée d'échantillonnage «h» de la bascule 10;
– l'entrée «S» de la bascule 9 reçoit le signal f;
– la sortie de la bascule 9 est reliée à l'entrée de remise à zéro «RAZ» du compteur 11, dont l'entrée de comptage «h» reçoit les impulsions de l'horloge 12;
– la sortie du compteur 11 fournit un signal noté q amené à l'entrée de données «D» de la bascule 10, la sortie de celle-ci fournissant le signal e.

Le circuit logique considéré comprend encore des composants réalisant l'équivalent d'un contact 13 placé en sortie du comparateur découpeur 8, s'ouvrant pendant le signal f, d'un contact 14 placé à l'entrée «R» de la bascule 9, se fermant pendant le signal c d'autorisation de comptage.

En raison du montage adoptés, les deux générateurs de courant 1 et 2 sont mis en service simultanément durant la présence des signaux a et e, soit pendant les intervalles de temps $t0–t1$ et $t3–t5$. Par le «contact» 5, le courant traversant la capacité C est alors commuté alternativement, entre les intensités $+i$ et $-i$; plus précisément: la capacité C est chargée sous une intensité $+i$ lorsque le niveau du signal reçu d s'élève au-dessus de la valeur précédemment obtenue pour la tension m, et est déchargée sous une intensité $-i$ lorsque le niveau du signal reçu d s'abaisse au-dessous de la valeur précédemment obtenue pour la tension m.

On comprend que, durant le signal a la capacité est déchargée et durant le signal e, elle est alternativement chargée et déchargée, et son état de charge tend vers un équilibre dans lequel les durées de charge, sous l'intensité $+i$, sont egales aux durées de décharge, sous l'intensité $-i$, donc dans lequel les espacements temporels entre les intersections des courbes d et m sont égaux. Après découpage du signal reçu d par rapport à la valeur d'équilibre, ou valeur moyenne ainsi obtenue m5, on obtient donc bien l'égalité de durée des 1 et des 0 du signal découpé DM. Pendant l'intervalle de temps $t0–t1$, la valeur moyenne du signal est le niveau du noir, c'est-à-dire la tension de référence m0.

Seul le générateur de courant 1, débitant une intensité $+2i$, est en service durant le signal b constituant la seconde portion du signal f, soit pendant l'intervalle de temps $t1–t2$. Compte tenu de la commutation par le signal d, la capacité C se charge alors sous l'intensité $+2i$, chaque fois que le signal d dépasse la valeur instantanée de la tension m, et n'est traversée par aucun courant, donc reste chargée sous la tension m précédente, quand le signal d reste au-dessous de cette tension. La capacité est donc chargée, à la fin du signal b, à la valeur de crête des perturbations intervenant durant ce signal b.

Enfin, lorsqu'aucun des deux générateurs de courant 1 et 2 n'est en service, ce qui est le cas pendant les intervalles de temps $t2–t3$ et $t5–t0$, la dernière valeur de tension m aux bornes de la capacité C est conservée, cette capacité n'étant ni chargée, ni déchargée. Le maintien de la capacité dans son état de charge précédent assure ainsi la mémorisation des valeurs m2 (seuil établi par la prise de valeur de crête) et m5 (valeur moyenne mesurée).

Pour une meilleure compréhension de ce qui précède, on pourra se référer au tableau de la page suivante qui indique, pour un cycle de fonctionnement c'est-à-dire pour la durée d'une ligne de télévision, les séquences de charge de la capacité C mises en relation avec les phases successives du procédé. Pour les signaux a et e et f, les symboles 1 et 0 du tableau correspondent respectivement à la présence et á l'absence de ces signaux.

Il est à noter que, pendant la durée de la prise de valeur de crête, soit entre les instants t1 et t2, la valeur m1 de la tension m ne dépasse pas tout de suite les perturbations. Après le découpage du signal reçu d par cette tension m, le signal résultant DM contiendra donc des informations parasites entre les instants t1 et t2. Pour éviter ceci, il est nécessaire d'interdire la transmission du signal découpé DM, par le signal b ou le signal f présent durant l'intervalle $t1–t2$, ce qui peut être réalisé soit en inhibant le comparateur découpeur 8, soit en bloquant la transmission en aval de ce comparateur 8, par exemple au moyen du «contact» 13 de la fig. 2.

La bascule «R–S» 2 autorise le fonctionnement du comparateur 11, en repérant le premier front montant du signal découpé DM se présentant à partir de l'instant t2 d'apparition du signal c. Le compteur 11 délivre alors un signal g, de longueur prédéterminée, qui définit la durée $t4–t3$. La bascule «D» 10 permet, enfin, d'engendrer le signal e qui commence en même temps que le signal g, soit à l'instant t3, mais qui se termine seulement à l'apparition du premier front montant du signal découpé DM se présentant après l'instant t4. On obtient ainsi le signal e de durée $t5–t3$ qui sert à définir la prise de valeur moyenne m5. Le compteur 11 est remis à zéro par l'apparition du prochain signal f.

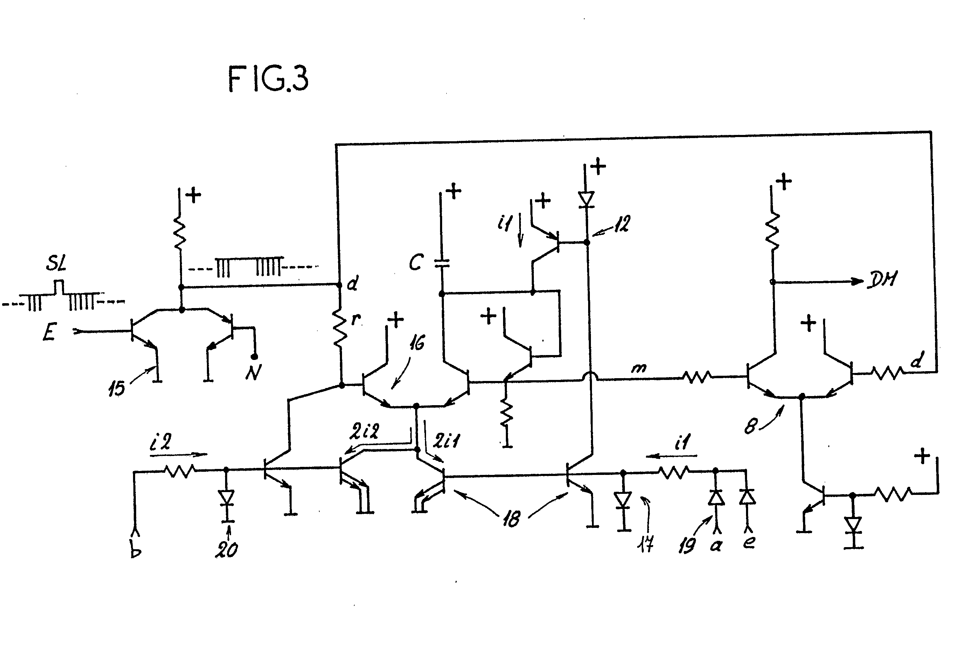

La fig. 3 montre un exemple de réalisation pratique du circuit dont le principe vient d'être décrit

| Instant | t 0 | | t 1 | t 2 | t 3 | t 4 | t 5 |
|---|---|---|---|---|---|---|---|
| Signal a | 0 | 1 | 0 | 0 | 0 | 0 | 0 |
| Signal e | 0 | 0 | 0 | 0 | 1 | 0 | 0 |
| Signal f | 0 | 1 | 1 | 0 | 0 | 0 | .0 |
| Générateur de courant 1 (intensité +2i) | hors service | en service | en service | hors service | en service | en service | hors service |
| Générateur de courant 2 (intensité -i) | hors service | en service | hors service | hors service | en service | en service | hors service |
| Courant de charge de C | 0 | ±i | ±2i ou 0 | 0 | ±i | ±i | 0 |
| Séquence de charge de C | Maintien au niveau m5 | Décharge jusqu'à la référence m0 | charge à la valeur de crête | Maitien au niveau m2 | Charges et décharges alternées selon les valeurs relatives de d et m | | Maintien au niveau m5 |
| Phase du procédé | Mémorisation | remise à zéro | Prise de valeur de crête | Mémorisation | Prise de valeur moyenne | | Mémorisation |

tout en illustrant certaines variantes possibles par rapport à la fig. 2.

Dans ce circuit, le signal vidéo est appliqué en «négatif» à une entrée E, c'est-à-dire avec le signal de «synchronisation ligne» SL orienté vers les valeurs positives, et les signaux de données orientés vers les valeurs négatives. Ce signal d'entrée est écrêté par valeurs positives au-dessus du noir, au moyen d'un écrêteur 15 constitué par deux transistors dont l'un a sa base reliée à un point N maintenu à un potentiel qui correspond au niveau du noir. Ce montage élimine le signal de «synchronisation ligne» et permet de redresser les perturbations superposées au niveau du noir, ce qui facilitera leur détection de crête ultérieure.

Le circuit comprend toujours une capacité C et un comparateur découpeur 8, donnant le signal découpé DM, la réalisation de ce comparateur au moyen de transistors étant visible sur la partie droite de la fig. 3.

La capacité C est associée à un comparateur-intégrateur 16, constitué par deux transistors, qui réalise la commutation de charge-décharge de cette capacité, en fonction des valeurs des signaux d et m.

La réalisation des générateurs de courant constant est ici quelque peu modifiée, par rapport à la fig. 2. On utilise des «répétiteurs de courant» formés par une diode et un transistor, la diode étant constituée par un transistor ayant la même tension de jonction que le transistor lui-même, d'une façon connue. Des générateurs 17 et 18, engendrant respectivement des courant +il et −2il, sont mis en service par le signal a ou e, grâce à une porte OU réalisée au moyen de diodes, comme indiqué en 19. Ainsi, ces deux générateurs fonctionnent simultanément, durant le signal a servant à la remise à zéro et le signal e servant à la prise de valeur moyenne, pour établir le niveau de tension initial m0 et la valeur moyenne m5, l'intensité traversant la capacité C étant alors +il. Un générateur de courant distinct 20, mis en service par le seul signal b et fournissant un courant +2i2, sert à la prise de valeur de crête. Ceci permet de doser de façon optimale le courant de charge intermittent −2i2 de la capacité C pour la détection de crête des perturbations, durant l'intervalle t1–t2.

La résistance r permet en outre, durant ce dernier intervalle de temps, de décaler le niveau de tension du signal reçu d d'une valeur $\Delta V = r \cdot i2$, de manière à fixer une valeur de seuil m2 convenable, même en l'absence de bruit.

On notera, enfin, que dans le cas considéré de la fig. 3, le signal vidéo étant appliqué «en négatif», les sens des courants de charge et de décharge de la capacité C sont inversés par rapport au cas de la fig. 2.

## Revendications

1. Procédé pour l'extraction de données numériques contenues dans un signal vidéo en présence de bruits et de distorsions appliqué à un système de «vidéotexte», pour l'extraction de données numériques insérées sur des lignes de télévision et précédées d'une salve de synchronisation (S) constituée par une succession de 1 et de 0 alternés, apparaissant après le signal de «synchronisation ligne» (SL) de télévision, plus particulièrement procédé dans lequel on compare le signal vidéo (d) à un signal de référence de découpage (m), ce signal de référence de découpage (m) évoluant selon les phases suivantes:
- à partir de la synchronisation ligne établissement du signal de référence (m) à un niveau initial (valeur m0) inférieur ou égal à la moitié de la plus petite amplitude de salve prévisible,
- augmentation de ce signal pour l'amener à une valeur de seuil correspondant sensiblement à la valeur de crête du bruit ou autres signaux reçus pendant l'intervalle de temps précédant l'instant le plus tôt possible d'apparition de la salve, caractérisé par les phases ci-après:
- à partir de cet instant le plus tôt possible, mémoriser la valeur du signal (valeur m2),
- dès que le signal vidéo devient supérieur à la valeur mémorisée (m2), détecter cette transition pour modifier le signal de référence (m) et l'amener à la valeur moyenne du signal vidéo pendant une durée correspondant à la durée connue de la salve,
- à la fin de cette durée connue, mémoriser la valeur moyenne (valeur m5) et l'utiliser comme signal de référence de découpage des données, la mise à la valeur de seuil (m2), d'une part, et la prise de valeur moyenne (m5), d'autre part, étant effectuées par les mêmes moyens, plus particulièrement le même circuit incluant une capacité (C).

2. Procédé selon la revendication 1, caractérisé en ce que, après la détection du premier 1 de la salve (S), on définit la durée de prise de valeur moyenne (m3) par comptage d'un nombre entier prédéterminé de périodes d'une horloge locale (12).

3. Procédé selon l'ensemble des revendications 1 et 2, caractérisé en ce que le début du comptage précité est autorisé par un signal de porte (C), commençant à l'instant où la valeur de seuil, est mémorisée, et finissant après l'instant le plus tardif probable d'apparition de la salve.

4. Procédé selon la revendication 2 ou 3, caractérisé en ce que l'instant de fin de la prise de valeur moyenne, et de mémorisation de cette valeur, est retardé, à partir de la fin du comptage, jusqu'à une transition déterminée de la salve (S).

5. Procédé selon la revendication 4, caractérisé en ce que l'instant (t3) de fin de la prise de valeur moyenne, et de mémorisation de cette valeur, est retardé jusqu'au premier front montant d'un signal (signal découpé DM) apparaissant après la fin du comptage.

6. Procédé selon la revendication 5, caractérisé en ce que la valeur moyenne (m5), mémorisée lors de la ligne de télévision précédente, est ramenée à son niveau initial (m0) par un signal de remise à zéro (a) qui est présent pendant le signal de «synchronisation ligne» (SL) et en ce que la valeur de seuil (m2) précitée est établie durant l'intervalle de «suppression lignes».

7. Dispositif pour l'extraction de données numériques en présence de bruit et de distorsions, mettant en œuvre le procédé selon la revendication 1, caractérisé en ce qu'il comprend: une capacité (C), des moyens de charge (1) et des moyens de décharge (2) commutables connectés en parallèle sur cette capacité; un comparateur découpeur (8) dont une entrée est reliée à une borne de ladite capacité (C), et dont l'autre entrée reçoit le signal vidéo à analyser (d); des moyens de commutation (7) aptes à décharger la capacité pendant le signal de remise à zéro; d'autres moyens de commutation (3-4) aptes à charger de façon intermittente la capacité, pendant un signal présent á l'intérieur de l'intervalle de «suppression lignes», par les crêtes du signal reçu; et encore d'autres moyens de commutation (5) aptes à charger et décharger alternativement la capacité (C), sous la même intensité, en fonction du niveau de signal reçu pendant la salve de synchronisation (S), pour la prise de valeur moyenne (m3); la capacité (C) servant à la mémorisation de la valeur de seuil et de la valeur moyenne précédemment établies, lorsqu'aucun des moyens de charge et de décharge (1 et 2) n'est mis en service par lesdits moyens de commutation (3, 4, 5, 6, 7).

8. Dispositif selon la revendication 7, caractérisé en ce que les moyens de charge et de décharge comprennent deux générateurs de courant respectivement (1, 2), le premier délivrant une intensité +2i et le second une intensité −i, les moyens de commutation étant tels que les deux générateurs sont mis en service simultanément durant la présence des signaux de remise à zéro et de commande de prise de valeur moyenne (m3), et tels que seul le générateur (1) délivrant l'intensité +2i est mis en service durant la présence du signal de commande de prise de valeur de crête.

9. Dispositif selon la revendication 7 ou 8, caractérisé en ce qu'il comprend encore, à la sortie du comparateur découpeur (8), un compteur (11) relié à l'horloge locale (12) de lecture des données et associé, d'une part, à une bascule (9), telle que du type «R–S», pour l'autorisation de fonctionnement du compteur (11) par le signal de porte précité et pour sa remise à zéro, d'autre part, à une bascule (10), telle que du type «D», dont l'entrée «données» (D) reçoit le signal de sortie du compteur et dont l'entrée «échantillonnage» (h) reçoit le signal découpé.

10. Dispositif selon la revendication 9, caractérisé en ce qu'il est prévu, en aval du comparateur découpeur (8), des moyens (13) d'interdiction de la transmission du signal découpé pendant la durée de la prise de valeur de crête.

11. Dispositif selon la revendication 7, caractérisé en ce que les moyens de charge et de décharge comprennent trois générateurs de courant, comprenant deux générateurs (17 et 18) engendrant respectivement les courants +i1 et −2i1, et un autre générateur (20) fournissant un courant +2i2, les deux premiers générateurs (17, 18) étant mis en service simultanément durant la présence des signaux de remise à zéro et de prise de valeur moyenne, et le troisième générateur (20) étant mis en service seulement pendant le signal de commande de prise de valeur de crête.

12. Dispositif selon la revendication 11, caractérisé en ce qu'il comprend en outre une résistance (r) montée de manière à décaler le niveau de tension du signal reçu d'une valeur r · i2 durant la prise de valeur de crête.

**Claims**

1. Process for extracting digital data contained in a video signal in the presence of noise and distortions applied to a «videotext» system, for extracting digital data inserted on television lines and preceded by a synchronization volley (S) constituted by a succession of alternated 0 and 1, appearing after the television «line synchronization» (5L), more particularly a process in which the video signal (d) is compared with a cutting off reference signal (m), this cutting off reference signal (m) evoluating according to the following phases:

– from a synchronization line establishing from the reference signal (m) at an initial value (value m0) inferior or equal to half the smallest amplitude of the foreseeable volley,

– increasing this signal in order to bring it to a threshold,

– value corresponding substantially to the value of the noise peak or other signals received during the time interval preceding the earliest possible moment the volley appears, characterized by the following phases:

– from this earliest possible moment, memorizing the value of the signal (m2),

– once the video signal becomes higher than the value memorized (m2), detecting this transition in order to modify reference signal (m) and to bring it to the average value of the video signal for a duration corresponding to the known duration of the volley,

– at the end of this known duration, memorizing the average value (value (m5) and using it as the data cutting off reference signal, bringing to the average threshold value (m2), on the one hand, and defining the average value (m5), on the other hand, being carried out by the same means, more particularly the same circuit including a capacitor (c).

2. Process according to claim 1, characterized in that, after detection of the first 1 of the volley (5), the duration for defining the average value (m3) is defined by counting a predetermined integer of periods of a local clock (12).

3. Process according to one of claims 1 and 2, characterized in that the beginning of the above-mentioned counting is authorized by a gate signal (c), beginning at the instant when the threshold value is memorized and finishing after the latest probable instant that the volley appears.

4. Process according to claim 2 or 3, characterized in that the instant of the end of the average value definition, and the memorization of this value, is delayed, from the end of counting, until a determined transition of the volley (5).

5. Process according to claim 4, characterized in that the instant (t3) of the end of the definition of the average value and memorization of this value is delayed until the first rising front of a signal (cut off signal DM) appearing after the end of counting.

6. Process according to claim 5, characterized in that the average value (m5), memorized at the preceding television line, is brought back to its initial level (m0) by a return to zero signal (a) that is present during the «line synchronization» (SL) and in that the above-mentioned threshold value (m2) is established during the «lines suppression» interval.

7. Device for extracting digital data in the presence of noise and distortions, operating the process according to claim 1, characterized in that it comprises: a capacitor (c), switchable charge (1) and discharge (2) means connected in parallel on this capacitor; a cutting off comparator (8) of which one input is connected to a terminal of the said capacitor (c), and of which the other receives the video signal to be analyzed (d); switchover means (7) adapted to discharge the capacitor during the return to zero signal; other switchover means (3–4) adapted to charge intermittently the capacitor, during a signal present within the «lines suppression» interval, by the peaks of the signal received; and again other siwtchover means (5) adapted to charge and discharge alternately the capacitor (c) under the same intensity, in function of the level of the signal received during the synchronization volley (S) for defining the average value (m3), the capacitor (c) acting for the memorization of the threshold value and previously established average value, when none of the charge and discharge means (1 and 2) is operated by the said switchover means (3, 4, 5, 6, 7).

8. Device according to claim 7, characterized in that the charge means and discharge means each comprising one current generator respectively (1, 2) the first delivering an intensity $+2i$ and the second an intensity $-1$, the switchover means being such that two generators are operated simultaneously during the presence of the signals for return to zero and control of definition of the average value (m3) and such that only the generator (1) delivering the intensity $+2i$ is operated during the presence of the control signal of defining the peak value.

9. Device according to claim 7 or 8, characterized in that it further comprises, at the output of the cutting off comparator (8), a counter (11) connected to the local clock (12) for reading the data and associated, on the one hand, to a tilting circuit (9), such as the R–S type, to authorize the operating of the counter (11) by the above-mentioned date signal and for its return to zero, on the other hand, to a tilting circuit (10), such as the «D» type the «data» input (D) receives the output signal of the counter and the «sampling» input (h) of which receives the cut-off signal.

10. Device according to claim 9, characterized in that are foreseen, downstream of the cutting off comparator (8), means (13) prohibiting the transmission of the cut out signal for the duration of the definition of the peak value.

11. Device according to claim 7, characterized in that the charge and discharge means comprise three current generators, comprising two generators (17 and 18) supplying respectively currents $+i1$ and $-2i1$, and another generator (20) supplying a current $+2i2$, the first two generators (17, 18) being operated simultaneously during the presence of return to zero signal and average value definition signal, and the third generator (20) being operated only during the control signal of the definition of the peak value.

12. Device according to claim 11, characterized in that it comprises furthermore a resistance (r) mounted in such a way as to shift the voltage level of the signal received by a value ri2 during the definition of the peak value.

**0 022 723**

**Patentansprüche**

1. Verfahren zur Gewinnung von numerischen in einem Bildsignal bei Anwesenheit von Geräuschen und Verzerrungen enthaltenen Angaben, das bei einem «Bildschirmtextsystem» angewendet wird, zur Gewinnung von numerischen Angaben, die in die Fernsehzeilen eingefügt sind und denen eine Synchronisationssignalreihe (S) vorausgeht, die von einer Folge von abwechselnden 1 und 0 gebildet wird, die nach dem «Fernsehsynchronisationszeilensignal» (SL) auftritt, insbesondere Verfahren, bei dem man das Bildsignal (d) mit einem Ausschneidreferenzsignal (m) vergleicht, wobei dieses Ausschneidreferenzsignal (m) den folgenden Phasen entsprechend sich entwickelt:
- von der Zeilensynchronisation ab Erstellen des Referenzsignals (m) mit einem Ausgangsniveau (Wert m0) unterhalb oder gleich der Hälfte der kleinsten Amplitude der voraussehbaren Signalreihe,
- Erhöhen dieses Signals, um es an einen Schwellenwert hinzuführen, der in etwa dem Höchstwert des Geräusches oder anderer Signale entspricht, die während des dem Auftreten der Signalreihe so nah wie möglich liegenden Zeitintervalls empfangen werden, durch die nachfolgenden Verfahrensphasen gekennzeichnet,
- von diesem frühestmöglichen Zeitpunkt ab den Signalwert speichern (Wert m2),
- sobald das Bildsignal grösser wird als der gespeicherte Wert (m2), diesen Wechsel aufspüren, um das Referenzsignal (m) zu verändern und es an den Durchschnittswert des Bildsignals während einer der bekannten Dauer der Signalreihe entsprechenden Dauer hinführen,
- am Ende dieser bekannten Dauer den Mittelwert (Wert m5) speichern und ihn als Referenzsignal zum Ausschneiden der Angaben benützen, wobei einerseits die Angleichung an den Schwellenwert (m2) und anderseits die Feststellung des Durchschnittswerts (m5) von denselben Mitteln durchgeführt wird, spezieller von derselben, eine Kapazität (c) beinhaltenden Schaltung.

2. Verfahren nach Anspruch 1, dadurch gekennzeichnet, dass man nach dem Ermitteln der ersten 1 der Signalreihe (S) die Dauer der Feststellung des Durschnittswerts (M3) durch Zählen einer vorbestimmten geraden Anzahl von Perioden einer örtlichen Uhr (12) bestimmt.

3. Verfahren nach der Gesamtheit der Ansprüche 1 und 2, dadurch gekennzeichnet, dass der Beginn des vorgenannten Zählens von einem Torsignal (G) gestattet wird, das in dem Moment, in dem der Schwellenwert gespeichert wird, beginnt und nach dem Moment aufhört, in dem es zuletzt wahrscheinlich ist, dass die Signalreihe auftritt.

4. Verfahren nach Anspruch 2 oder 3, dadurch gekennzeichnet, dass der Moment der Beendigung der Feststellung des Durchschnittswertes und die Speicherung dieses Werts nach der Beendigung des Zählens bis zu einem bestimmten Wechsel der Signalreiche (S) hinausgezögert wird.

5. Verfahren nach Anspruch 4, dadurch gekennzeichnet, dass der Moment (t3) der Beendigung der Feststellung des Durchschnittswertes und der Speicherung dieses Wertes bis zur ersten steigenden Front eines nach der Beendigung des Zählens erscheinenden Signals (ausgeschnittenes Signal DM) hinausgezögert wird.

6. Verfahren nach Anspruch 5, dadurch gekennzeichnet, dass der während der vorangehenden Fernsehzeile gespeicherte Durchschnittswert (m5) auf sein Ausgangsniveau (m0) durch ein Nullstellungssignal (a) zurückgeführt wird, das während des «Fernsehsynchronisationszeilensignals» (SL) gegenwärtig ist, und dadurch, dass der vorgenannte Schwellenwert (m2) während des Intervalls der «Zeilenunterdrückung» erstellt wird.

7. Vorrichtung zur Absonderung von numerischen Angaben bei Anwesenheit von Geräuschen und Verzerrungen, die das Verfahren nach Anspruch .1 ausführen, dadurch gekennzeichnet, dass sie umfasst: eine Kapazität (C), Lademittel (1) und Entlademittel (2), die beide schaltbar sind und mit dieser Kapazität parallel geschaltet sind; einen ausschneidenden Komparator (8), von dem ein Eingang mit einer Klemme der Kapazität C verbunden ist und dessen anderer Eingang das zu analysierende Bildsignal (d) empfängt; Kommutationsmittel (7), die in der Lage sind, die Kapazität während des Nullstellungssignals zu entladen; andere Kommutationsmittel (3–4), die in der Lage sind, in intermittierender Weise während eines innerhalb des Intervalls der «Zeilenunterdrükkung» anwesenden Signals die Kapazität durch die Spitzen des empfangenen Signals zu laden; und noch andere Kommutationsmittel (5), die in der Lage sind, abwechselnd die Kapazität (C) unter der gleichen Stromstärke in Funktion des Niveaus des während der Synchronisationssignalreihe empfangenen Signals zur Feststellung des Durchschnittswerts (m3) zu laden und entladen; die Kapazität dient dabei der Speicherung des Schwellenwerts und des vorangehend erstellten Durchschnittswerts, wenn keines der Lade- und Entlademittel (1 und 2) durch die Kommutationsmittel (3.4.5.6.7) in Betrieb genommen ist.

8. Vorrichtung nach Anspruch 7, dadurch gekennzeichnet, dass die Lademittel und Entlademittel jeweils einen Stromgenerator (1, 2) umfassen, wobei der erste eine Stromstärke +2i liefert und der zweite eine Stromstärke −i, die Kommutationsmittel dabei dergestalt sind, dass die beiden Generatoren gleichzeitig in Betrieb genommen werden bei der Anwesenheit der Nullstellungssignale und Steuersignale der Feststellung des Durchschnittswerts (m3), und dergestalt, dass allein der die Stromstärke +2i liefernde Generator (1) bei der Anwesenheit des Steuersignals zur Feststellung des Spitzenwerts in Betrieb genommen ist.

9. Vorrichtung nach Anspruch 7 oder 8, dadurch gekennzeichnet, dass er ausserdem am Ausgang des ausschneidenden Komparators (8) einen Zähler (11) umfasst, der mit der örtlichen Uhr (12) zum Lesen der Angaben verbunden ist und einerseits an eine Kippschaltung (9) wie z.B. des «R–S»-Typs zu dem Erlauben des Funktionierens des Zählers (11) durch das vorgenannte Türsignal und seiner Nullstellung angeschlossen ist, anderseits an eine Kippschaltung (10), wie z.B. des «D»-Typs, deren Eingang «Angaben» (D) das Ausgangssignal des Zählers erhält und deren Eingang «Sortierung» (h) das ausgeschnittene Signal erhält.

10. Vorrichtung nach Anspruch 9, dadurch gekennzeichnet, dass unterhalb des ausschneidenden Komparators (8) Untersagungsmittel (13) der Übertragung des ausgeschnittenen Signals für die Dauer der Feststellung des Spitzenwerts vorgesehen sind.

11. Vorrichtung nach Anspruch 9, dadurch gekennzeichnet, dass die Lade- und Entlademittel drei Stromgeneratoren umfassen, die zwei Generatoren (17 und 18) aufweisen, die den Strom $+i1$ bzw. $-2i1$ erzeugen, und ein anderer Generator (20), der einen Strom $+2i2$ erzeugt, wobei die beiden ersten Generatoren (17, 18) gleichzeitig in Betrieb genommen sind bei der Anwesenheit der Nullstellungs- und Durchschnittswertfeststellungssignale und der dritte Generator (20) nur bei dem Steuersignal der Feststellung des Spitzenwerts in Betrieb genommen ist.

12. Vorrichtung nach Anspruch 11, dadurch gekennzeichnet, dass er zudem einen Widerstand (r) umfasst, der so geschaltet ist, dass er das Spannungsniveau des empfangenen, einen Wert $r \cdot i2$ aufweisenden Signals während der Feststellung des Scheitelwerts verschiebt.

FIG.1

Suppression lignes

S

D

SL

m

m5

R    m1    m2    m3    d    m5

m0

Fin de memorisation | Remise à zéro | Prise de valeur de crête | Memorisation | Prise de valeur moyenne | Memorisation

a

b

c

Découpage

e

Egalité du 1 et du 0

DM

(a+b)

Comptage

f

Découpage

g

1 2 3 ........

t0    t1    t2    t'3    t3    t4    t5    t

T

FIG.2

0 022 723

# FIG.3